# FASCICULE DE BREVET EUROPEEN

(11) **EP 2 146 287 B1**
(45) Date de publication et mention de la délivrance du brevet: **25.01.2012**
(21) Numéro de dépôt: 09163517.7
(22) Date de dépôt: 23.06.2009
(51) Int. Cl.: G06F 13/42, G06F 13/40

(54) **Interface entre un bus bifilaire et un bus unifilaire**
Schnittstelle zwischen einem Doppelleitungsbus und einem Einzelleitungsbus
Interface between a two-wire bus and a single-wire bus

(30) Priorité: 16.07.2008 FR 0854820
(43) Date de publication de la demande: 20.01.2010
(73) Titulaire: STMicroelectronics (Rousset) SAS, 13790 Rousset (FR); PROTON WORLD INTERNATIONAL N.V., 1930 Zaventem (BE)
(72) Inventeur: Laurencin, Christophe, 13124, Peypin (FR); Modave, Jean-Louis, 1340, Ottignies (BE)
(74) Mandataire: de Beaumont, Michel

(56) Documents cités:
- WO-A-2007/004178
- US-A- 6 066 964

## Description

### Domaine de l'invention

La présente invention concerne les circuits électroniques et, plus particulièrement, la transmission de données numériques entre deux circuits dans un système de type maître-esclave. L'invention s'applique plus particulièrement à la conversion de signaux numériques entre un premier bus de type bifilaire (données et horloge) et un deuxième bus de type unifilaire.

### Exposé de l'art antérieur

On connaît de nombreux systèmes de conversion ou d'interface entre des bus de communication adaptés à des protocoles différents. Ces systèmes sont le plus souvent destinés à des bus multifilaires de part et d'autre.

Le document US 6 066 964 décrit un bus dynamique dans lequel une communication peut être établie sur l'une ou l'autre phase d'un signal d'horloge.

Il serait souhaitable de disposer d'une solution pour permettre une communication de type maître-esclave entre deux circuits dont le dispositif maître de la communication utilise un bus comportant un fil de données et un fil d'horloge et dont le dispositif esclave utilise un bus ne comportant qu'un fil.

Il serait également souhaitable de disposer d'une telle solution même si le circuit fonctionnant sur le bus unifilaire tire son alimentation de ce fil.

Il serait également souhaitable de résoudre les problèmes de synchronisation éventuels des échanges entre les deux circuits.

### Résumé

Un objet de la présente invention est de pallier tout ou partie des inconvénients nuisant à la compatibilité des communications entre un bus bifilaire et un bus unifilaire.

Un mode de réalisation vise plus particulièrement une solution dans un système de communication de type maître-esclave où le bus unifilaire véhicule également l'alimentation d'un des circuits.

Pour atteindre tout ou partie de ces objets ainsi que d'autres, un mode de réalisation prévoit un procédé de conversion d'un premier bus comportant au moins un fil de données et un fil d'horloge en un bus unifilaire, dans lequel un bit de donnée du premier bus est converti, sur une demi-période du signal d'horloge pour transmission sur le deuxième bus, un motif d'attente étant placé sur le deuxième bus pendant l'autre demi-période.

Selon un mode de réalisation de la présente invention, le motif d'attente est présent sur chaque première demi-période du signal présent sur le fil d'horloge lors d'une transmission du deuxième bus vers le premier bus et sur chaque deuxième demi-période du signal présent sur le fil d'horloge pour une transmission dans l'autre sens.

Selon un mode de réalisation de la présente invention, le motif d'attente est un train d'impulsions de durée fixe.

Selon un mode de réalisation de la présente invention, le motif d'attente correspond à une répétition du bit transmis.

Selon un mode de réalisation de la présente invention, un bit de données à transmettre du premier bus vers le deuxième bus est positionné sur le deuxième bus à l'apparition d'un front montant sur le fil d'horloge du premier bus.

Selon un mode de réalisation de la présente invention, un bit de données à transmettre du deuxième bus vers le premier bus est positionné, sur le fil de données du premier bus, à l'apparition d'un front montant sur le fil d'horloge du premier bus.

Selon un mode de réalisation de la présente invention, un motif d'accusé-réception, arrivant sur le deuxième bus dans une deuxième demi-période du signal présent sur le fil d'horloge, est converti pour être transmis sur le fil de données du premier bus sur le front montant suivant de ce signal.

Il est également prévu un dispositif de conversion d'une transmission entre un premier bus comportant au moins un fil de données et un fil d'horloge, et un deuxième bus unifilaire.

Il est également prévu un système de communication maître-esclave entre un premier dispositif susceptible de communiquer sur un bus I2C et un deuxième dispositif susceptible de communiquer sur un bus unifilaire, comportant au moins un tel dispositif de conversion.

Selon un mode de réalisation de la présente invention, le premier dispositif est une imprimante et le deuxième dispositif une cartouche d'encre.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 est un schéma-blocs d'un mode de réalisation d'un système de communication ;
la figure 2 représente, partiellement et sous forme de blocs, deux circuits susceptibles de communiquer dans un protocole maître-esclave de type I2C ;
les figures 3A, 3B, 3C et 3D illustrent une communication entre les deux circuits de la figure 2 ;
la figure 4 représente, partiellement et sous forme de blocs, deux circuits susceptibles de communiquer selon un protocole maître-esclave sur un bus unifilaire ;
la figure 5 est un chronogramme illustrant une communication entre les deux circuits de la figure 4 ;
les figures 6A, 6B, et 6C sont des chronogrammes illustrant un problème se posant pour une conversion entre les bus I2C et unifilaire des figures 2 et 4 ;
la figure 7 est un schéma-blocs d'un mode de réalisation d'un circuit d'interface ou de conversion;
la figure 8 illustre un mode de codage effectué par le circuit de conversion de la figure 7 ;
les figures 9A, 9B et 9C sont des chronogrammes illustrant un exemple de communication dans le sens bus bifilaire vers bus unifilaire avec le codage de la figure 8 ;
les figures 10A, 10B et 10C sont des chronogrammes illustrant un exemple de communication dans le sens bus unifilaire vers bus bifilaire avec le codage de la figure 8 ;
les figures 11A, 11B et 11C sont des chronogrammes illustrant un exemple de communication dans le sens bus bifilaire vers bus unifilaire dans un mode de réalisation avec un autre exemple de codage ;
les figures 12A, 12B et 12C sont des chronogrammes illustrant un exemple de communication dans le sens bus unifilaire vers bus bifilaire avec cet autre exemple de codage ; et
la figure 13 est un schéma-blocs illustrant un exemple d'application du système décrit.

De mêmes éléments ont été désignés par de mêmes références aux différentes figures.

### Description détaillée

Par souci de clarté, seuls les étapes et éléments utiles à la compréhension des modes de réalisation exposés seront décrits. En particulier, l'exploitation faite des données dans chacun des circuits communiquant n'a pas été détaillée, les modes de réalisation décrits étant compatibles avec les utilisations usuelles de ces données. De plus, la génération des signaux à transmettre par les différents circuits communiquant n'a pas non plus été détaillée, l'invention étant là encore compatible avec les circuits usuels de génération de tels signaux.

Les modes de réalisation feront par la suite référence à une communication entre un dispositif maître utilisant un protocole connu sous la dénomination I2C et un dispositif esclave utilisant un protocole unifilaire du type de celui décrit dans les brevets américain 5,903,607 et européen 0 798 901. L'invention s'applique toutefois plus généralement à tout protocole de communication utilisant côté bus bifilaire, un fil de données et un fil d'horloge (par exemple, le protocole connu sous la dénomination SPI). Elle s'applique également à tout protocole partageant un bus unifilaire pour les données et un signal d'horloge (par exemple, le protocole connu sous la dénomination SWP - Single Wire Protocol).

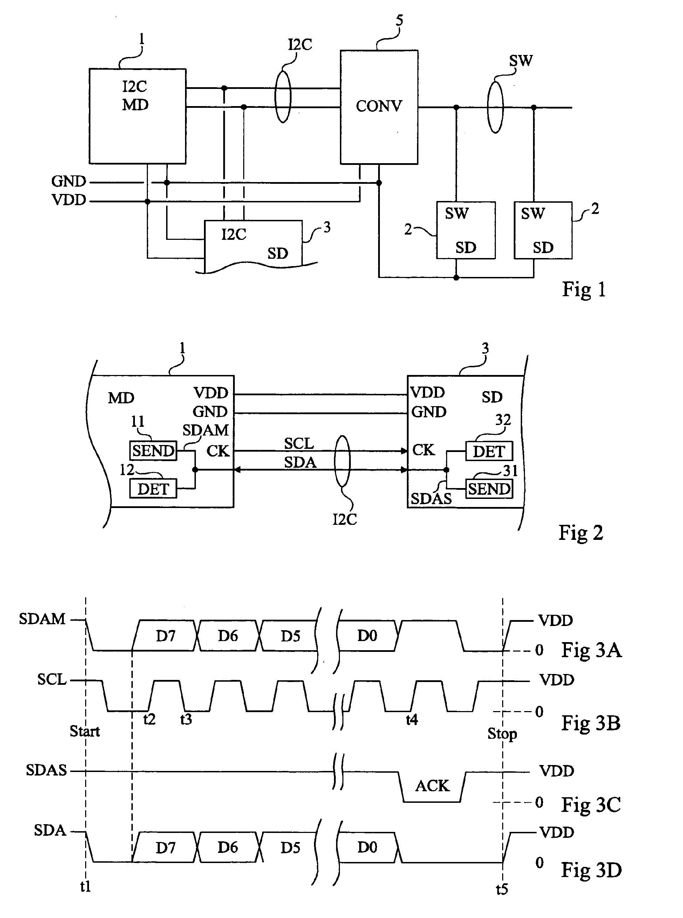

La figure 1 est un schéma-blocs d'un mode de réalisation d'un système de communication entre un circuit 1 susceptible de transmettre des données selon le protocole I2C et d'autres circuits parmi lesquels au moins un circuit 2 susceptible de communiquer selon un protocole unifilaire SW. Dans l'exemple de la figure 1, le circuit 1 est un circuit maître (MD) et est susceptible de communiquer, côté bus I2C, avec un ou plusieurs dispositifs esclave 3 (SD). Le bus I2C est connecté à un circuit 5 de conversion (CONV) en un bus unifilaire SW. Côté bus SW, un ou plusieurs circuits 2 de type esclave sont susceptibles d'être connectés. Les différents circuits du système peuvent être alimentés indépendamment les uns des autres ou, comme cela est représenté, au moins les circuits 1, 3 et 5 sont alimentés par un bus d'alimentation susceptible de véhiculer au moins un potentiel d'alimentation VDD et un potentiel de référence GND, par exemple la masse. Côté circuits 2, ceux-ci sont connectés à une référence de potentiel qui peut être la même (GND) que les autres circuits ou être une masse différente. Dans ce dernier cas, le circuit de conversion 5 est pourvu d'une barrière d'isolement. Selon une autre variante, les circuits 2 sont également alimentés indépendamment du bus SW, par exemple par la tension VDD ou autre.

La figure 2 est un schéma-blocs partiel reprenant les circuits 1 et 3 de la figure 1.

Chaque circuit 1, 3 comporte, par exemple, un circuit d'émission (SEND) 11, 31 et un circuit de réception (DET) 12, 32. Les circuits 1 et 3 sont reliés l'un à l'autre par le bus I2C ainsi que par les deux fils VDD et GND du bus d'alimentation. Un premier fil SCL du bus I2C véhicule un signal d'horloge SCL entre deux bornes d'horloge CK des circuits 1 et 3. Typiquement, ce signal d'horloge est imposé par le circuit maître 1. Un deuxième fil SDA du bus I2C véhicule les données entre les deux circuits. Le bus I2C est bidirectionnel.

Les figures 3A, 3B, 3C et 3D sont des chronogrammes illustrant une communication entre les circuits 1 et 3 de la figure 2. Ces figures illustrent un exemple de transmission d'un mot (typiquement un octet) de données du circuit maître 1 vers le circuit esclave 3. Pour clarifier la description, les figures 3A, 3C et 3D représentent l'allure de signaux SDAM, SDAS et SDA correspondant respectivement au signal positionné par le circuit d'émission 11 du circuit maître sur le fil SDA, au signal positionné par le circuit 31 sur ce fil, et au niveau résultant de ce fil SDA. Malgré la représentation simplifiée de la figure 2, on considère que les circuits de réception 12 et 32 respectifs des circuits 1 et 3 observent l'état du fil SDA indépendamment des niveaux imposés SDAM et SDAS par les circuits d'émission 11 et 31. De même, pour simplifier, on néglige les chutes de tension par rapport aux potentiels d'alimentation et on considère que les niveaux hauts correspondent à la tension VDD et que les niveaux bas correspondent à la masse.

Au repos, les deux fils SCL et SDA du bus I2C sont au niveau haut. En supposant que le circuit 1 veuille transmettre une trame de données au circuit 3, il prend le contrôle du bus en imposant un niveau bas sur le signal SDA (instant t1) alors que le signal SCL reste au niveau haut. Cette condition de départ (Start) effectuée, le circuit maître 1 génère le signal d'horloge SCL. Puis, le circuit 1 impose un niveau 1 ou 0 sur le fil SDA en fonction du premier bit D7 de l'octet à transmettre. Ce positionnement du niveau du fil SDA doit intervenir avant le front montant du signal d'horloge (instant t2) qui valide la donnée transmise. Lorsque le signal SCL revient au niveau bas (instant t3), le circuit maître 1 peut imposer le niveau correspondant à l'état du bit suivant D6 sur le fil SDA, et ainsi de suite. Une fois le dernier bit D0 transmis, le circuit maître place le signal SDAM au niveau haut, pour surveiller l'arrivée d'un d'accusé-réception. Son circuit de détection 12 surveille en même temps l'état réel du fil SDA. Pour indiquer une réception correcte, le circuit esclave 3 impose un niveau bas (figure 3C) sur le fil SDA. Le circuit maître vérifie l'état du fil SDA au front montant (instant t4) du signal SCL qui suit son positionnement à l'état haut du signal SDAM. Si le fil SDA est au niveau bas (comme illustré en figure 3), cela signifie une transmission réussie. Dans le cas contraire, il doit réémettre la donnée (une condition de départ - Start - doit pour cela être émise sur le bus I2C). Une fin de transmission (libération du bus) s'effectue par le circuit maître en commutant le fil SDA au niveau haut alors que le signal SCL est également au niveau haut (instant t5). Une fois cette condition d'arrêt (stop) effectuée, le bus I2C est libre pour démarrer une autre trame I2C. Il peut s'agir par exemple d'une transmission du circuit 3 vers le circuit 1. Le protocole de communication I2C fixe différentes conditions additionnelles dans la transmission selon que celle-ci concerne une adresse, une donnée, une écriture ou une lecture dans le circuit esclave, etc.

Pour simplifier, on fait référence à des commutations vers des niveaux haut et bas. En pratique, un bus I2C fonctionne le plus souvent par libération du bus pour l'état haut et forçage à l'état bas.

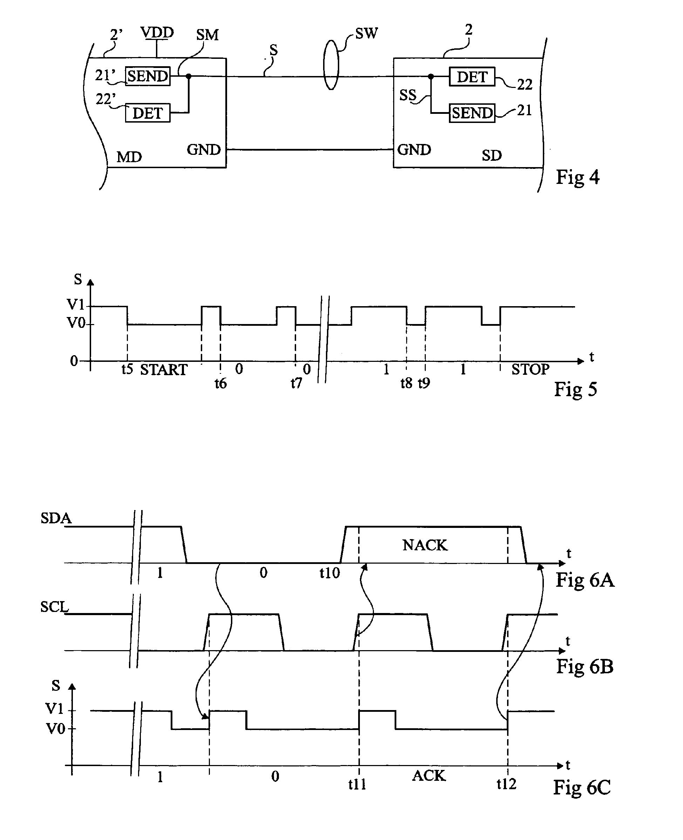

La figure 4 est un schéma-blocs partiel reprenant les circuits 2 de la figure 1 en supposant que l'un d'entre eux (noté 2' en figure 4) impose à l'autre une communication selon un protocole unifilaire maître-esclave.

Comme pour les circuits 1 et 3, chaque circuit 2 ou 2' comporte un circuit d'émission (SEND) 21, 21' et un circuit de réception (DET) 22, 22' susceptible d'être relié à l'unique fil S du bus SW. Les deux circuits 2 et 2' partagent en outre une liaison de potentiel de référence (typiquement la masse GND). Pour une communication du circuit 2' vers le circuit 2, le circuit 2' impose un signal SM sur le bus. Pour une communication du circuit 2 vers le circuit 2', le circuit 2 impose un signal SS sur le bus. Le circuit qui provoque la transmission impose l'horloge sur le bus. Comme pour la figure 2, on a schématisé en figure 4 les signaux SM et SS comme provenant respectivement des circuits 21' et 21 et on considère que les circuits 22' et 22 ne voient que l'état du signal S.

La figure 5 est un chronogramme représentant un exemple d'allure du signal S imposé par le circuit maître 2' illustrant une communication entre les circuits 2' et 2.

Le protocole unifilaire consiste à transmettre sur le bus à la fois un signal d'horloge ou de synchronisation et les données. Indépendamment de la communication, le circuit maître 2' alimente généralement le circuit esclave 2 comme cela est illustré en figure 4 où seul le circuit maître 2' reçoit le potentiel d'alimentation VDD. Le circuit esclave tire son alimentation d'un filtrage du signal S dont le niveau de repos imposé par le circuit maître est un niveau haut V1.

Pour transmettre des données du circuit 2' vers le circuit 2, le circuit 2' module le signal SM en amplitude entre deux niveaux V1 et V0, par exemple tous deux positifs, selon un codage prédéfini. Cette modulation se retrouve sur le signal S. Dans l'exemple représenté, une transmission est initialisée par un bit de démarrage START dans lequel le signal S est forcé (instant t5) au niveau V0. Cela initialise le circuit esclave 2 et le prépare à recevoir des données. Le circuit maître 2' module le niveau du signal S au rythme d'un signal d'horloge qui fixe le débit de transmission. La transmission d'un bit au niveau 0 s'effectue, par exemple, avec une impulsion de niveau V1 inférieure à la demi-période du signal horloge (par exemple, un quart de la période) alors qu'un niveau 1 est codé avec une impulsion de niveau V1 supérieure à la demi-période de ce signal d'horloge (par exemple, trois quarts de la période). Le circuit esclave détecte la variation d'amplitude et la durée correspondante des impulsions haute et basse pour déterminer la valeur des bits transmis.

Dans le sens circuit esclave 2 vers circuit maître 2', le circuit esclave modifie la charge qu'il impose sur le fil S selon le niveau du bit qu'il souhaite transmettre. Là encore, le débit de la transmission est fixé par un signal d'horloge au rythme duquel le circuit 2 module l'amplitude du signal S. L'horloge est ici fixée par une horloge interne du circuit 2 alors que le niveau (V1) de repos du bus reste fixé par le circuit 2'.

Les bus I2C et SW sont tous deux des bus de communication bidirectionnelle alternée (semi-duplex ou half-duplex). Le rôle du circuit 5 (figure 1) de conversion ou d'interface est, en quelque sorte, de transformer une transmission du circuit 1 de la figure 2 pour qu'elle soit vue par le circuit 2 comme si elle provenait d'un circuit 2' (figure 4), et de transformer une transmission du circuit 2 de la figure 4 pour qu'elle soit vue par le circuit 1 comme si elle provenait du circuit 3 (figure 2).

Les figures 6A, 6B et 6C illustrent un exemple de ce que pourrait réaliser un circuit d'interface entre un bus I2C et un bus unifilaire. Un point critique est que, côté bus I2C, il faut détecter le bit d'accusé-réception à la fin d'une trame. Aux figures 6A à 6C, seule la fin d'une telle trame a été illustrée par la transmission d'un 1 puis d'un 0 sur le signal SDA, supposé converti côté bus unifilaire avec des formes d'impulsions du type de celles illustrées en figure 5. Comme indiqué en relation avec les figures 3A à 3D, une fois émis le dernier bit, le circuit maître communiquant selon le protocole I2C positionne le fil SDA au niveau haut (instant t10) et surveille en même temps le niveau de ce fil pour détecter un forçage à l'état bas provoqué par le circuit esclave indiquant une transmission correcte. Si, au front montant qui suit (instant t11) du signal SCL, le signal SDA n'a pas été tiré au niveau bas par le circuit esclave, le circuit maître considère une transmission incorrecte. Or, le circuit esclave ne pourrait, avec le protocole de la figure 5, positionner un signal correspondant à un accusé-réception (par exemple, l'équivalent de la transmission d'un 0) pour qu'il soit interprété par l'interface et transmis côté bus I2C, qu'à partir de cet instant t11 qui suit le dernier bit des données qu'il reçoit (dans cet exemple un état 0). Par conséquent, le signal SDA ne serait tiré à l'état bas qu'au front montant suivant (instant t12) du signal SCL. A l'instant t11, le circuit maître interpréterait donc une absence d'accusé-réception (NACK).

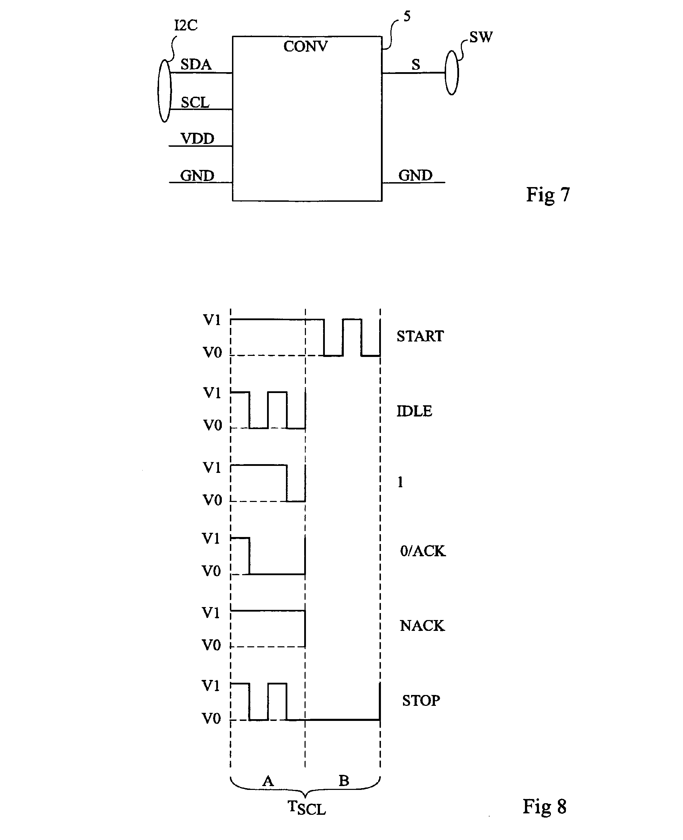

La figure 7 représente, sous forme de blocs, un mode de réalisation d'un circuit 5 de conversion entre un bus I2C et un bus SW. Dans l'exemple de la figure 7, on considère que le circuit 5 est alimenté côté bus I2C (par exemple, par le circuit maître) et que le circuit côté bus SW tire son alimentation du signal S. Le circuit 5 est, par exemple, réalisé sous la forme d'un processeur de traitement (par exemple, un microprocesseur) capable d'exécuter des instructions logicielles représentatives d'un algorithme de conversion des données entre les deux bus. Selon un autre exemple de réalisation, le circuit 5 est un circuit représentant une machine d'états en logique câblée. Selon encore un autre exemple, ce circuit 5 est un circuit intégré spécifique (ASIC), un microcontrôleur, un réseau de portes programmables (FPGA). Tous ces circuits possèdent leur propre horloge interne.

Pour permettre une synchronisation correcte dans les transmissions entre les deux bus, on prévoit de coder, côté bus SW, les états des bits sur une demi-période du signal SCL du bus I2C, et de compléter la période restante par un motif déterminé. On prévoit également d'inverser la position du signal utile dans la période du signal SCL entre la première et la deuxième demi-période en fonction du sens de transmission maître-esclave ou esclave-maître, donc selon le sens de conversion I2C vers SW ou SW vers I2C.

La figure 8 illustre un exemple de codage côté bus SW réalisé par le circuit 5 de conversion. Un motif prédéterminé (IDLE) constitué, dans cet exemple, d'un train d'impulsions représentant deux impulsions au niveau haut (V1) sur 1/8 de la période T_{SCL}, est utilisé pour compléter le signal utile dans la première A ou deuxième B demi-période du signal SCL. Le motif IDLE est généré par le circuit 5 de sorte que l'émission par les dispositifs connectés à ce circuit n'est pas modifiée.

Un bit de démarrage transmis par le bus I2C est converti en un niveau haut (V1) pendant une première demi-période A du signal SCL et est suivi dans la deuxième demi-période B du motif IDLE.

Un bit à l'état 1 respecte le codage du protocole SW avec une impulsion à l'état V1 représentant 3/4 de la période utile (1/2 période du signal SCL).

Un bit à l'état 0 correspond à un niveau V1 pendant 1/4 de la période utile. Le même motif est utilisé pour transmettre, depuis le dispositif esclave, un bit d'accusé-réception ACK.

Un bit d'absence d'accusé-réception NACK est représenté par un niveau haut permanent sur la période utile (demi-période du signal SCL) dans la mesure où l'état de repos du bus SW est le niveau haut V1.

Un bit d'arrêt est représenté, sur une période entière T_{SCL} du signal SCL, par le motif IDLE suivi d'un niveau bas dans la deuxième demi-période B.

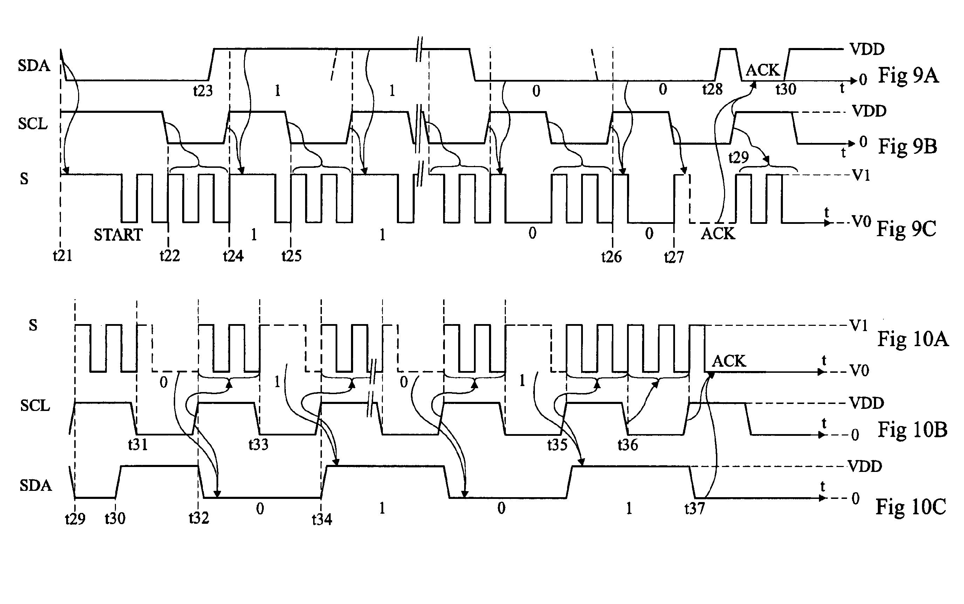

Les figures 9A, 9B et 9C sont des chronogrammes illustrant un exemple de conversion, par l'élément 5 de la figure 7, d'une transmission d'un octet de données depuis le bus I2C vers le bus SW. Dans l'exemple des figures 9A à 9C, on suppose des motifs tels qu'illustrés par la figure 8.

Le circuit 5 détecte une commutation (instant t21) à l'état bas du signal SDA alors que le signal SCL reste à l'état haut, ce qui identifie une condition de départ du bus I2C. Cette détection provoque la génération, par le circuit 5, d'un motif de départ START de communication sur le fil S. Au front descendant qui suit (instant t22) du signal SCL sur le bus I2C, l'élément 5 positionne un motif d'attente IDLE sur le fil S pendant une demi-période de l'horloge SCL. Pendant cette demi-période, arrive de façon usuelle sur le signal SDA, le positionnement du premier bit de données à transmettre (instant t23). Dans cet exemple, on suppose un premier bit à l'état 1. Le front montant du signal SCL qui suit (instant t24) provoque le positionnement, par le circuit 5, d'un motif de bit à l'état 1 pendant une demi-période du signal SCL sur le signal S. Au front descendant suivant du signal d'horloge (instant t25), l'élément 5 positionne le motif d'attente IDLE. Ce fonctionnement se poursuit jusqu'à la transmission du dernier bit du mot (instant t26) qui est suivie par l'arrivée sur le bus I2C d'une demande d'accusé-réception par un positionnement du signal SDA (instant t28) à l'état haut et la surveillance, par le circuit connecté sur ce bus, de l'état de ce signal pour détecter l'arrivée d'un accusé-réception. Dès que le circuit esclave connecté au bus SW a reçu le dernier bit de l'octet transmis, il positionne conformément au protocole unifilaire un bit d'accusé-réception ACK au front descendant (instant t27) du signal SCL qui suit immédiatement le front montant ayant positionné le dernier bit. Cela signifie qu'au dernier bit, le circuit 5 ne rajoute pas le motif d'attente IDLE. Par conséquent, le circuit 5 est en mesure, à l'instant t29 correspondant au front montant suivant du signal SCL, de détecter l'accusé-réception renvoyé sur le bus SW, pour tirer le signal SDA au niveau bas permettant ainsi au circuit maître connecté au bus I2C de détecter l'accusé-réception ACK. En variante, par exemple dans une configuration fonctionnant en "pull up" où le niveau V0 l'emporte sur le niveau V1, le motif ACK l'emporte sur le motif IDLE (là où le motif IDLE est au niveau V0, le motif ACK doit l'être également).

A l'instant t29, l'élément 5 positionne également un motif d'attente IDLE sur le bus unifilaire SW pour permettre au circuit esclave de répondre au circuit maître. Par ailleurs, le circuit 5 libère le fil SDA, par exemple à un instant t30, avant le front descendant suivant du signal SCL. En figure 9C, tous les motifs du signal S sont positionnés par l'élément 5 à l'exception du motif d'accusé-réception illustré en pointillés (figure 9C) à l'instant t27 qui provient du circuit esclave. Côté bus I2C, tous les motifs sont positionnés par le dispositif maître à l'exception de la commutation à l'instant t29 du signal SDA vers l'état bas qui est provoquée par le circuit de conversion 5 ayant interprété le motif d'accusé-réception du dispositif esclave, et de la libération du fil SDA à l'instant t30. Si le circuit esclave n'a pas à répondre et que la transmission est considérée terminée, le circuit maître maintient le fil SDA au niveau bas (annulant l'effet provoqué par le circuit de conversion à l'instant t30), puis provoque une commutation à l'état haut du signal SDA sur une période à l'état haut du signal SCL, permettant au circuit 5 d'envoyer un motif d'arrêt au circuit esclave.

Les figures 10A, 10B et 10C illustrent un exemple de transmission en retour depuis le dispositif esclave connecté sur le bus unifilaire vers le dispositif maître du bus I2C. On suppose qu'à la suite de la transmission maître-esclave des figures 9A à 9C, le circuit 5 libère le bus I2C à l'instant t30. Ainsi, le signal SDA redevient à l'état haut sur le bus I2C correspondant à son état de repos. Côté dispositif esclave, celui-ci démarre une transmission dès le front descendant suivant (instant 31) du signal SCL et positionne son premier bit de réponse. Le circuit 2 transmet des bits codés par la longueur de l'impulsion au niveau V1. Il fixe, grâce à ses circuits internes d'horloge, la forme des motifs communiqués en direction du circuit 5. La fréquence est toutefois choisie pour être supérieure à la fréquence du signal SCL de façon à ce qu'il puisse coder les données comme cela est illustré, par exemple, en figure 8. Comme le circuit 2 reçoit la fréquence du signal SCL par le circuit 5, il peut régler sa fréquence d'émission en conséquence. Le circuit 5 interprète alors les variations de longueur d'impulsions sur le signal S pour les convertir, côté fil SDA, et agir en maître côté bus I2C. Dans l'exemple représenté, le positionnement du premier bit correspond à un motif 0 sur une demi-période du signal SCL. Au front d'horloge suivant du signal SCL (instant t32), l'élément 5 transmet le premier bit à l'état 0 qu'il a interprété du bus unifilaire sur le signal SDA en commutant celui-ci à l'état bas en même temps qu'il positionne, sur le bus SW, le motif d'attente IDLE. Le front d'horloge descendant qui suit (instant t33) se traduit par la lecture, par le dispositif 5, du motif suivant (par exemple état 1) présent sur le signal S. Le circuit 5 positionne ce bit sur le bus I2C au front montant suivant (instant t34) du signal SCL, et ainsi de suite jusqu'à la fin de transmission de l'octet concerné. Comme pour les figures précédentes, les motifs du signal S positionnés par le circuit 5 ont été illustrés en traits pleins alors que les motifs positionnés par le circuit 2 ont été illustrés en pointillés. Au front montant du signal SCL (instant t35) qui suit la réception, par le circuit 5, du dernier bit du mot transmis, celui-ci positionne le bit d'attente sur le fil S. Puis, au front descendant qui suit (instant t36), il repositionne un bit d'attente sur la deuxième partie de la période du signal SCL. Cela permet que la commutation à l'état bas du signal SDA, provoquée par le dispositif 1 au front montant suivant (instant t37) du signal SCL, soit interprétée par l'élément 5 comme un accusé-réception. Le circuit 5 positionne alors, sur le bus unifilaire SW, le motif d'accusé-réception ACK (correspondant à un bit à l'état 0).

Selon le sens de communication, le motif d'attente IDLE est donc positionné, soit sur la première demi-période du signal SCL, soit sur la seconde. Cela permet dans les deux sens de pouvoir interpréter correctement un bit d'accusé-réception.

Côté bus I2C, la mise en oeuvre proposée ne requiert aucune modification du dispositif maître, cette mise en oeuvre étant transparente pour celui-ci. Côté dispositif esclave, celui-ci doit être capable d'interpréter le motif d'attente, de séquencer les bits et de renvoyer le motif ACK dans une séquence gérable pour une conversion en temps réel. En fait, il gère un canal pour représenter les bits et un autre canal pour les motifs IDLE et la permutation des canaux pour transmettre dans l'autre sens à temps pour la conversion vers le bus I2C.

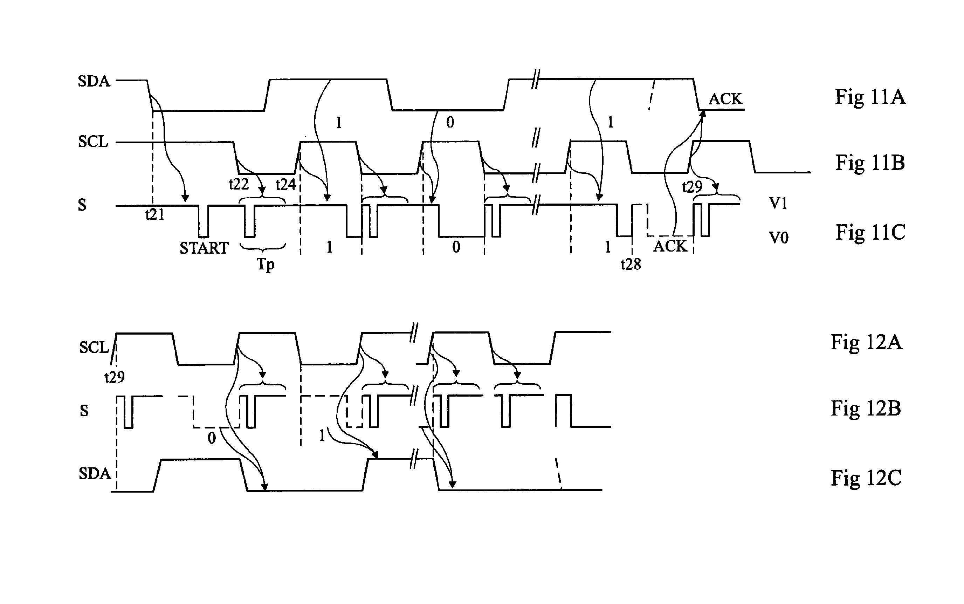

Les figures 11A, 11B et 11C et les figures 12A, 12B et 12C illustrent un autre exemple de transmission dans le sens maître-esclave puis esclave-maître. Cet exemple montre une autre modification qui est un motif d'attente différent de celui illustré en figure 8. Le motif d'attente généré par le convertisseur 5 est ici une impulsion à l'état bas (niveau V0) au voisinage du début du motif. Ce motif est choisi pour présenter une durée Tp inférieure à la demi-période du signal SCL.

Comme dans l'exemple précédent, le circuit de conversion 5 détecte (instant t21) une condition de départ sur le bus I2C qu'il fait suivre sur le bus unifilaire. Dès qu'arrive le premier front descendant (instant t22) du signal SCL, le circuit 5 positionne le motif d'attente sur le bus unifilaire. Puis, au front montant suivant (instant t24), fait suivre le motif correspondant au premier bit transmis. Comme l'illustre la figure 11C, le motif d'attente ne va pas jusqu'au front montant du signal SCL.

Dès qu'il a décodé le dernier bit transmis, le dispositif esclave positionne, sur le bus unifilaire le motif d'accusé-réception (instant t28). Comme il est synchronisé par le décodage des bits qu'il reçoit, cette transmission est également synchronisée sur le signal SCL. Au front montant suivant (instant t29), l'élément 5 force le signal SDA à l'état bas permettant ainsi une détection par le dispositif maître. De façon similaire à l'exemple précédent, on suppose alors une inversion du sens de transmission à l'instant t29.

De façon similaire à l'exposé des figures 10A à 10C, les figures 12A à 12C illustrent la transmission d'un octet dans le sens esclave-maître. Le fonctionnement se déduit de celui exposé en relation avec les figures précédentes.

Selon un autre mode de réalisation, le deuxième canal (demi-période du signal SCL) sert à répéter le bit transmis. Il sert alors de redondance. Le motif d'attente est alors variable en forme, durée et/ou selon le sens de transmission.

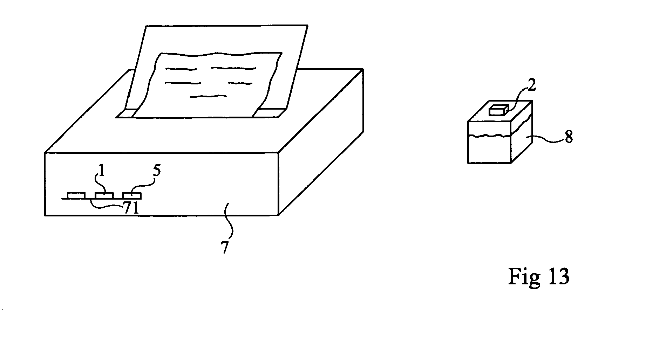

La figure 13 est un schéma bloc illustrant, de façon très schématique, un exemple d'application du système de communication décrit à des communications entre une imprimante 7 et une ou plusieurs cartouches d'encre 8. La cartouche 8 a été représentée hors de l'imprimante 7 mais, lorsqu'elle doit communiquer avec celle-ci, il s'agit bien entendu d'une cartouche positionnée dans l'imprimante. L'imprimante 7 est équipée d'une ou plusieurs cartes électroniques 71 comportant au moins un circuit 1 destiné à se comporter en circuit maître pour communiquer avec une ou plusieurs cartouches 8. La ou les cartouches comportent chacune un circuit 2 capable de communiquer selon un protocole unifilaire.

Dans l'exemple représenté, l'une des cartes 71 de circuits électroniques de l'imprimante comporte au moins un circuit de conversion 5 matériel ou logiciel pour convertir des transmissions sur un bus I2C côté imprimante en des transmissions sur bus unifilaire vers un circuit 2 d'une ou plusieurs cartouches.

En variante, le circuit de conversion 5 est placé côté cartouche et non côté imprimante.

L'exemple ci-dessus permet d'utiliser des circuits simplifiés dans les cartouches 8 grâce à l'exploitation d'un bus unifilaire et de rendre celles-ci compatibles avec des imprimantes capables de ne communiquer qu'à travers un bus I2C.

Différents modes de réalisation ont été décrits. Diverses variantes et modifications apparaîtront à l'homme de l'art. En particulier, une réalisation matérielle ou logicielle du circuit de conversion dépend des circuits et dispositifs disponibles côté dispositif maître et côté dispositif esclave.

## Revendications

1. Procédé de conversion d'un premier bus (I2C) comportant au moins un fil de données (SDA) et un fil d'horloge (SCL) en un bus unifilaire (SW), dans lequel :
un bit de donnée du premier bus est converti, sur une demi-période du signal d'horloge pour transmission sur le deuxième bus ; et
un motif d'attente (IDLE) est placé sur le deuxième bus pendant l'autre demi-période, le motif d'attente (IDLE) étant présent sur chaque première demi-période (A) du signal présent sur le fil d'horloge (SCL) lors d'une transmission du deuxième bus (SW) vers le premier bus (I2C) et sur chaque deuxième demi-période (B) du signal présent sur le fil d'horloge (SCL) pour une transmission dans l'autre sens.

2. Procédé selon la revendication 1, dans lequel le motif d'attente (IDLE) est un train d'impulsions de durée fixe.

3. Procédé selon la revendication 1, dans lequel le motif d'attente correspond à une répétition du bit transmis.

4. Procédé selon l'une quelconque des revendications 1 à 3, dans lequel un bit de données à transmettre du premier bus (I2C) vers le deuxième bus (SW) est positionné sur le deuxième bus à l'apparition d'un front montant sur le fil d'horloge (SCL) du premier bus.

5. Procédé selon l'une quelconque des revendications 1 à 4, dans lequel un bit de données à transmettre du deuxième bus (SW) vers le premier bus (I2C) est positionné, sur le fil de données (SDA) du premier bus, à l'apparition d'un front montant sur le fil d'horloge (SCL) du premier bus.

6. Procédé selon l'une quelconque des revendications 1 à 5, dans lequel un motif d'accusé-réception, arrivant sur le deuxième bus (SW) dans une deuxième demi-période du signal présent sur le fil d'horloge (SCL), est converti pour être transmis sur le fil de données du premier bus (I2C) sur le front montant suivant de ce signal.

7. Dispositif de conversion d'une transmission entre un premier bus (I2C) comportant au moins un fil de données (SDA) et un fil d'horloge (SCL), et un deuxième bus unifilaire (SW), comportant des moyens pour la mise en oeuvre du procédé selon l'une quelconque des revendications 1 à 6.

8. Système de communication maître-esclave entre un premier dispositif (1) susceptible de communiquer sur un bus I2C et un deuxième dispositif (2) susceptible de communiquer sur un bus unifilaire, comportant au moins un dispositif de conversion (5) conforme à la revendication 7.

9. Système selon la revendication 8, dans lequel le premier dispositif est une imprimante (7) et le deuxième dispositif une cartouche d'encre (8).

## Claims

1. A method for converting a first bus (I2C) comprising at least a data wire (SDA) and a clock wire (SCL) into a single-wire bus (SW), wherein:
a data bit of the first bus is converted on half a period of the clock signal for transmission over the second bus, and
a waiting pattern (IDLE) is set on the second bus during the other half-period, the waiting pattern (IDLE) being present on each first half-period (A) of the signal present on the clock wire (SCL) in a transmission from the second bus (SW) to the first bus (I2C) and on each second half-period (B) of the signal present on the clock wire (SCL) for a transmission in the other direction.

2. The method of claim 1, wherein the waiting pattern (IDLE) is a pulse train of fixed duration.

3. The method of claim 1, wherein the waiting pattern corresponds to a repeating of the transmitted bit.

4. The method of any of claims 1 to 3, wherein a data bit to be transmitted from the first bus (I2C) to the second bus (SW) is set on the second bus on occurrence of a rising edge on the clock wire (SCL) of the first bus.

5. The method of any of claims 1 to 4, wherein a data bit to be transmitted from the second bus (SW) to the first bus (I2C) is set, on the data wire (SDA) of the first bus, on occurrence of a rising edge on the clock wire (SCL) of the first bus.

6. The method of any of claims 1 to 5, wherein an acknowledgement pattern, arriving on the second bus (SW) in a second half-period of the signal present on the clock wire (SCL), is converted to be transmitted over the data wire (I2C) of the first bus on the next rising edge of this signal.

7. A device for converting a transmission between a first bus (I2C) comprising at least a data wire (SDA) and a clock wire (SCL), and a second single-wire bus (SW), comprising means for implementing the method of any of claims 1 to 6.

8. A master-slave communication system between a first device (1) capable of communicating over an I2C bus and a second device (2) capable of communicating over a single-wire bus, comprising at least one conversion device (5) of claim 7.

9. The system of claim 8, wherein the first device is a printer (7) and the second device is an ink cartridge (8).

## Patentansprüche

1. Ein Verfahren zum Konvertieren eines ersten Busses (12C), der wenigstens eine Datenleitung (SDA) und eine Taktleitung (SCL) aufweist, in einen Einzelleitungsbus (SW), wobei das Verfahren die folgenden Schritte aufweist:
ein Datenbit des ersten Busses wird während einer Halbperiode des Taktsignals zum Übertragen über den zweiten Bus konvertiert, und
ein Wartemuster (IDLE) wird während der anderen Halbperiode auf dem zweiten Bus gesetzt, wobei das Wartemuster (IDLE) in jeder ersten Halbperiode (A) des Signals anwesend ist, das auf der Taktleitung (SCL) anwesend ist, in einer Übertragung von dem zweiten Bus (SW) zu dem ersten Bus (12C) und in jeder zweiten Halbperiode (B) des Signals, das auf der Taktleitung (SCL) anwesend ist, für eine Übertragung in der anderen Richtung.

2. Das Verfahren nach Anspruch 1, wobei das Wartemuster (IDLE) eine Impulsfolge von festgelegter Dauer ist.

3. Das Verfahren nach Anspruch 1, wobei das Wartemuster einer Wiederholung des übertragenen Bits entspricht.

4. Das Verfahren nach einem der Ansprüche 1 bis 3, wobei ein zu übertragendes Datenbit von dem ersten Bus (12C) zu dem zweiten Bus (SW) auf dem zweiten Bus, beim Auftreten einer ansteigenden Flanke auf der Taktleitung (SCL) des ersten Busses, gesetzt wird.

5. Das Verfahren nach einem der Ansprüche 1 bis 4, wobei ein zu übertragendes Datenbit von dem zweiten Bus (SW) zu dem ersten Bus (12C) auf der Datenleitung (SDA) des ersten Busses, beim Auftreten einer ansteigenden Flanke auf der Taktleitung (SCL) des ersten Busses, gesetzt wird.

6. Das Verfahren nach einem der Ansprüche 1 bis 5, wobei ein Bestätigungsmuster, das auf dem zweiten Bus (SW) in einer zweiten Halbperiode des Signals, das auf der Taktleitung (SCL) anwesend ist, ankommt, konvertiert wird, um über die Datenleitung (12C) des ersten Busses auf der nächsten ansteigenden Flanke des Signals übertragen zu werden.

7. Eine Vorrichtung zum Konvertieren einer Übertragung zwischen einem ersten Bus (12C), der wenigstens eine Datenleitung (SDA) und eine Taktleitung (SCL) aufweist, und einem zweiten Einzelleitungsbus (SW), wobei die Vorrichtung Mittel zum Implementieren des Verfahrens nach einem der Ansprüche 1 bis 6 aufweist.

8. Ein Master-Slave Kommunikationssystem zwischen einer ersten Vorrichtung (1), die geeignet ist über einen 12C Bus zu kommunizieren und einer zweiten Vorrichtung (2), die geeignet ist über einen Einzelleitungsbus zu kommunizieren, wobei das Kommunikationssystem wenigstens eine Konvertierungsvorrichtung (5) nach Anspruch 7 aufweist.

9. Das System nach Anspruch 8, wobei die erste Vorrichtung ein Drucker (7) ist und die zweite Vorrichtung eine Tintenpatrone (8) ist.
